Europäisches Patentamt

European Patent Office

Office européen des brevets

(11) Veröffentlichungsnummer: **0 144 287 A2**

# (12) EUROPÄISCHE PATENTANMELDUNG

(21) Anmeldenummer: **84810554.0**

(22) Anmeldetag: **15.11.84**

(51) Int. Cl.⁴: **A 01 G 7/06**

(30) Priorität: **01.12.83 CH 6440/83**

(43) Veröffentlichungstag der Anmeldung:
**12.06.85 Patentblatt 85/24**

(84) Benannte Vertragsstaaten:
**AT BE CH DE FR GB IT LI LU NL SE**

(71) Anmelder: **Birchmeier & Cie.AG
Fabrikstrasse 124
CH-5444 Künten(CH)**

(72) Erfinder: **Graber, Alfred
Weidstrasse 167
CH-5525 Fischbach-Göslikon(CH)**

(74) Vertreter: **White, William et al,
PATENTANWALTS-BUREAU ISLER AG Postfach 6940
Walchestrasse 23
CH-8006 Zürich(CH)**

(54) Vorrichtung zum Einspritzen einer Flüssigkeit in die Leitungsbahnen einer Pflanze.

(57) Die Vorrichtung zum Einspritzen weist einen erster Kolben (20) in einem Zylinder (10) auf. Der Zylinder (10) ist bodenseitig von einer Kolbenstange (22) dieses ersten Zylinders (20) durchstossen und an deren Ende ist eine Injektionsnadel (31) befestigt. In Hohlraum (21) befindet sich ein zweiter Kolben (40). In den Hohlraum (21) ist eine den zweiten Kolben (40) durchdringende Zuleitung (41, 42, 53) geführt und in der Kolbenstange (22) befindet sich eine Ableitung (23) aus dem Hohlraum (21) zur Injektionsnadel (31). Beide Kolben (20, 40) sind einseitig durch Federn (70, 71) vorgespannt und werden in der anderen Richtung mittels eines Fluids gedrückt. Damit lassen sich Einstichtiefe für die Injektionsnadel und Menge an Flüssigkeit für die Injektion voreinstellen und der Betrieb kann auch durch ungelerntes Personal richtig gewährleistet werden.

EP 0 144 287 A2

./...

Fig. 1

Vorrichtung zum Einspritzen einer Flüssigkeit in die Leitungsbahnen einer Pflanze

Die vorliegende Erfindung betrifft eine Vorrichtung zum Einspritzen einer Flüssigkeit in die Leitungsbahnen einer Pflanze gemäss dem Oberbegriff des unabhängigen Patentanspruchs 1.

Durch direkte Injektion in den Stamm von Pflanzen, insbesondere Bäumen, werden Wachstumsregulatoren und Schutzmittel
den Bäumen direkt zugeführt. Ein wichtiges Anwendungsgebiet
dieser Injektionstechnik ist auch die Verhinderung von Krankheiten oder die Bekämpfung von Insenkten, die sich vom Laub
oder von den Holzfasern ernähren. Insekten können ebenso
wie Virus- oder Pilzinfektionen mittels einer derartigen
Chemotherapie durch Verwendung von Antibiotika und/oder
systemische Zufuhr von Insektiziden bekämpft werden. Es ist bekannt, dass die Bekämpfung verschiedener Insektenepidemien, wie die Psendophilus Testacens in Ghana im März
1978 auf diese Weise erfolgreich war. Auch konnte die Ausbreitung von Krankheiten unter Kontrolle gebracht werden.

Für die praktische Durchführung wurden die verwendeten
Flüssigkeiten mittels Schwerkraft über am Behälter angebrachte Ausflussrohre den Pflanzen zugeführt. Für giftige Stoffe
sind aber solche Geräte ungeeignet, weil die Behälter nicht
vollkommen dicht verschlossen sein können. Hochwirksam neuzeitliche Insektizide sind für Menschen giftig und dürfen
nur in vollkommen verschlossenen Behältern aufbewahrt werden.

Insektizide auf Phosphorbasis sind derart wirksam, dass nur
Mengen von 3 bis 6 cm$^3$ zugeführt werden müssen. Solche Stoffe sind z.T. aber derart giftig, dass Vorschriften für
deren Behandlung erlassen werden mussten.

In der DE-C 12 77 618 wurde demgemäss vorgeschlagen, den
Behälter aus zwei umgekehrt ineinanderschiebbaren, mit
ihren Mantelflächen dicht aufeinanderliegenden federförmigen
Teilen mit geschlossenen Böden auszubilden. Damit liess
sich das Problem der dichten Behälter einfach lösen. Die Flüssigkeit floss dann unter der Schwerkraft aus dem Behälter in den Baumstamm.

Eine andere Lösung wurde mit einem Behälter gefunden, bei dem noch ein zusätzlicher Raum für die Erzeugung eines Druckgases vorhanden war, gemäss der DE-C 12 40 325.

Jedoch für die Application der Mittel musste vorerst eine Injektionsnadel in den Stamm gebracht werden und zwar bis in diejenige Tiefe, in der sich die Leitungen der Pflanze befinden. In der DE-C 15 82 802 wurde von einem Werkzeug ausgegangen, bei dem ein Schlaggerät verwendet ist, um eine Injektionsnadel in den Stamm hineinzuschlagen, um dann einen vorbeschriebenen Behälter ansetzen zu können. Anstelle des Einschlagens einer Injektionsnadel wird in der DE-A 28 35 430 vorgeschlagen, Löcher im Stamm vorzubohren und in diese Löcher dann Düsen einzusetzen.

Bei allen diesen bekannten Anordnungen wird somit zuerst eine Injektionsnadel oder eine Düse in den Stamm der zu behandelnden Pflanze eingesetzt, um dann in einem zweiten Schritt die Flüssigkeit in einer gewünschten Menge durch die Nadel oder die Düse einzubringen.

Bis heute ist nur ein einziges Gerät bekannt, mit dem eine Flüssigkeit gleichzeitig mit der Bildung eines Zuganges zu den Leitungen zugeführt werden kann. Ein solches Gerät ist beispielsweise in der US-A 2 853 833 dargestellt. In einem Beilkörper befindet sich ein zylindrischer Raum mit einem Ventil, das durch einen Schlag mit dem Beil durch einen Stössel geöffnet wird. Eine Flüssigkeit wird damit zugeführt und durch mehrere Kanäle nahe der Schneide des Beilkörpers abgegeben. In nachteiliger Weise wird dabei aber die Pflanze stark verletzt.

Es ist daher eine Aufgabe der Erfindung, eine Vorrichtung zu schaffen, mit der ohne zusätzliche Werkzeuge zum Einsetzen der Injektionsnadel direkt bis zu einer vorbestimmten Tiefe in den Stamm hineingetrieben und danach eine gewünschte Menge einer Flüssigkeit eingetrieben werden kann.

Erfindungsgemäss wird dies durch die Merkmale im kennzeichnenden Teil des unabhängigen Patentanspruchs 1 erreicht.

Ein Ausführungsbeispiel der Erfindung wird nachfolgend anhand der Zeichnung erläutert. Es zeigen:

Fig. 1    einen Aufriss einer Vorrichtung nach der Erfindung zum Teil im Schnitt,


Fig. 2    dieselbe Vorrichtung von oben gesehen mit einer Partie zur Darstellung der Auslösemittel im Schnitt,


Fig. 3    einen Aufriss eines Ankers zur Halterung der Vorrichtung nach Fig. 1 und 2, und


Fig. 4    ein Schema einer Steuervorrichtung zur Betätigung der Injektionsnadel und zur Zufuhr von Flüssigkeit.


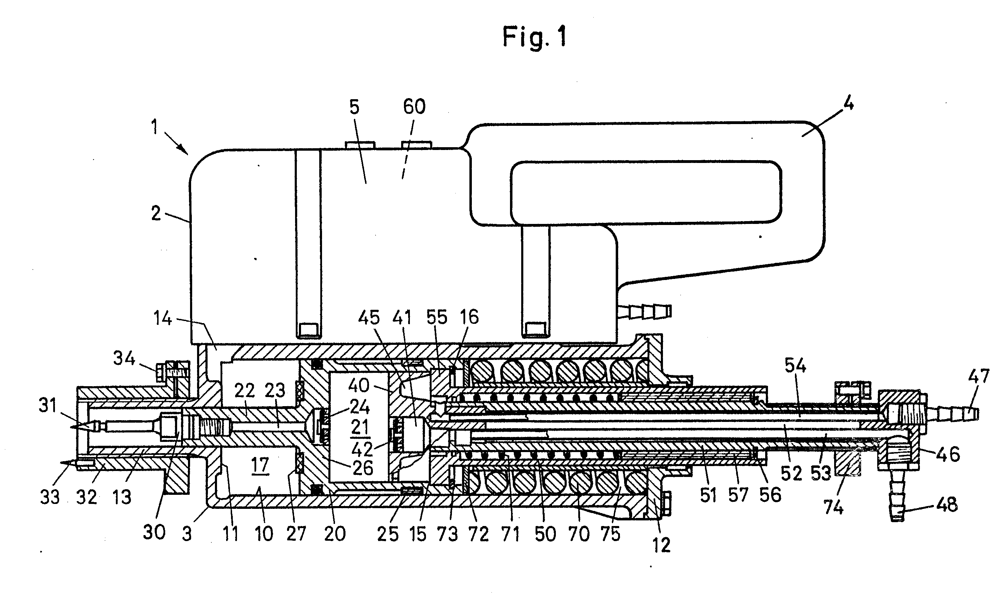

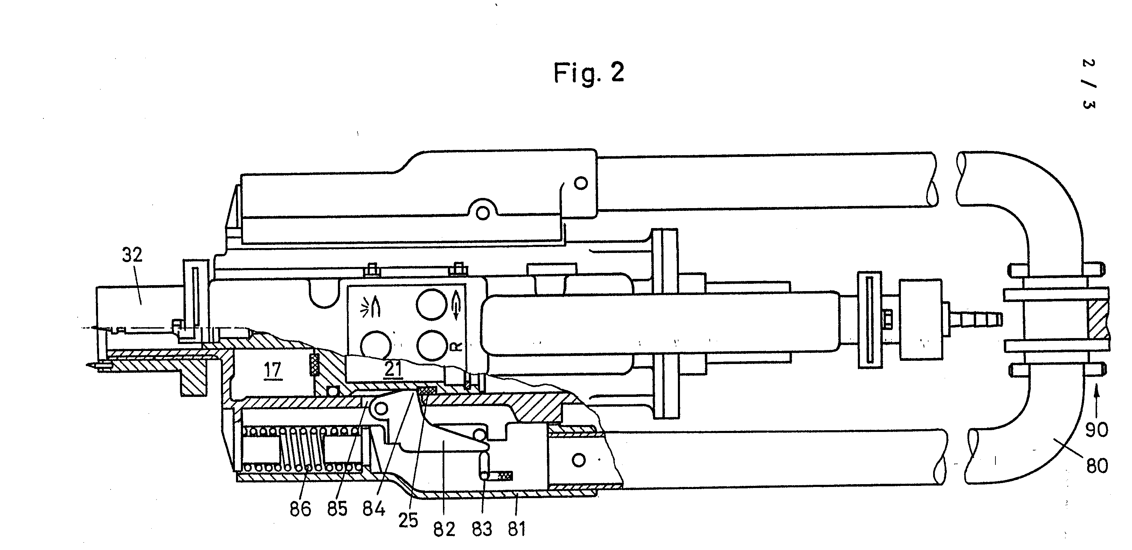

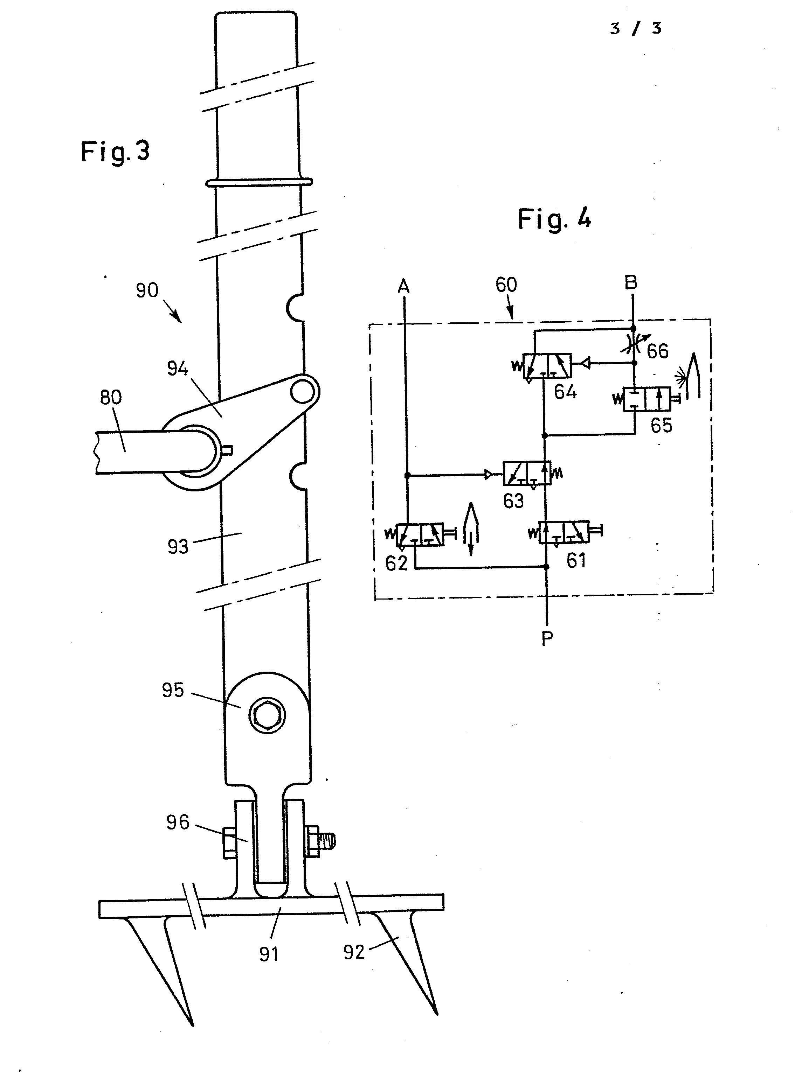

Die Injektionsvorrichtung gemäss Fig. 1 und 2 besteht aus
einem Gehäuse 1 mit einem Gehäuseoberteil 2 und einem Gehäuseunterteil 3. Am Gehäuseoberteil 2 ist ein Traggriff 4
befestigt und dieser weist eine rechteckige Ausnehmung 5
für die Aufnahme eines Steuergerätes 60 auf, das weiter unten und anhand von Fig. 4 näher erläutert wird. Zum Gehäuseunterteil 3 sind sämtliche Bestandteile für den aufgabengemässen Betrieb untergebracht.


Das Gehäuseunterteil 3 weist innenseitig eine zylindrische
Bohrung 10 auf, und links in Fig. 1 befindet sich ein Zylinderboden 11, an dem eine Schutzhülse 32 für die Injektionsnadel 31 mittels Schrauben 34 angeschraubt ist. Der Zylinderboden 11 ist zentrisch mit einem zylindrischen Stutzen 13
versehen.

Im Zylinder 10 befindet sich ein erster Kolben 20, der als
Hohlkolben mit einem zentralen, einseitig offenen Hohlraum
21 ausgebildet ist. Der Kolbenboden 26 ist aussenseitig einstückig mit einer Kolbenstange 22 verbunden, die sich in
den Stutzen 13 des Zylinderbodens 11 hinein erstreckt. Die
Kolbenstange 22 ist zentral durchbohrt und diese Bohrung 23
bildet eine Flüssigkeitsleitung vom Hohlraum 21 bis zu einer
auf die Kolbenstange 22 aufgesetzten Injektionsnadel 31. Ein
Rückschlagventil 24 in der Bohrung 23 verhindert ein Zurückfliessen von ausgestossener Flüssigkeit.

Der Hohlraum 21 ist ebenfalls zylindrisch ausgebildet und in
diesen Hohlraum 21 ist ein zweiter Kolben 40 eingesetzt. Dieser Kolben 40 ist mit einer rohrförmigen Kolbenstange 51 verbunden, die den Zylinderdeckel 12 zentrisch durchstösst. Im
Abstand um diese Kolbenstange 51 herum ist ein Führungsrohr
50 angeordnet, das kolbenseitig den einen Hohlraumboden 55
trägt. Dieser Hohlraumboden 55 ist in einer Ausnehmung 15
innenseitig im Kolben 20 mittels eines Sprengringes 16 unverschiebbar gehaltert.

Im Hohlraum 73 zwischen der Führungshülse 50 und der Zylinderwand 10 befindet sich eine erste Druckfeder 70, die einerseits am Zylinderdeckel 12 und anderseits an einer beweglich auf dem ersten Kolben 20 aufgelegten Platte 72 abgestützt ist. Eine zweite Feder 71 befindet sich im Hohlraum zwischen der Führungshülse 50 und der Kolbenstange 51 des zweiten Kolbens 40. Einerseits ist diese zweite Feder 71 auf einer Schulter 73 am kolbenseitigen Ende und anderseits an einem aussenseitig an der Kolbenstange 51 eingelassenen Sprengring 56 sich abstützenden Einsatz 57 abgestützt.

Eine erste Leitung 54 für ein Druckfluid befindet sich im Hohlraum der Kolbenstange 51 und diese mündet in den Raum 45 zwischen zweitem Kolben 40 und Hohlraumboden 55.

In einem Anschlusselement 46, das starr mit der Kolbenstange 51 verbunden ist, sind zwei Schlauchstutzen 47, 48 eingesetzt. Der Schlauchstutzen 47 dient der Zuleitung von Druckfluid zu der genannten Leitung 54.

Eine zweite, ebenfalls im Innern der Kolbenstange 51 untergebrachte Leitung verbindet durch den zweiten Kolben 40 hindurch den anderen Schlauchstutzen 48 mit dem Hohlraum 21 im ersten Kolben 20. Zur Verhinderung eines Zurückfliessens von Flüssigkeit aus dem Hohlraum; beim Bewegen des Kolbens 40 ist in dieser Zuleitung ein weiteres Rückschlagventil 42 angeordnet. Am zweiten Stutzen 48 ist vorgesehen, die zu injizierende Flüssigkeit zuzuführen.

In der schon erwähnten Ausnehmung 5 im Gehäuseteil 2 befindet sich die Steuervorrichtung 60, die in Fig. 4 schematisch dargestellt ist. Es sind drei Anschlüsse A, B, P vorhanden. Der Anschluss P dient der Zufuhr von Druckfluid über die Oeffnung 14 im Zylinderboden 11 und der Anschluss B bringt das Druckfluid über eine nicht dargestellte Leitung an den Schlauchanschluss 62.

In dieser Steuervorrichtung 60 befinden sich vier 3/2-Wegeventile und ein 2/2-Wegeventil. Zwei 3/2-Wegeventile 61, 62 sind handbetätigt und zwei 3/2-Wegeventile 63, 64 sind druckfluidbetätigt. Auch das 2/2-Wegeventil 65 ist handbetätigt. Somit kann durch Betätigung des Ventils 62 Druckfluid vom Anschluss P zu Anschluss A fliessen. Durch Betätigung des Ventils 65 wird das Ventil 64 geöffnet und wird dann mittels der Drossel 66 offen gehalten. Mit dem Ventil 63 wird Fluid in den Raum 21 geleitet.

In Fig. 2 ist noch eine Vorrichtung zum Auslösen des ersten Kolbens 20 dargestellt. In einer Aussenpartie 81 des unteren Gehäuseteils 3 befindet sich ein Abzugshebel 82, der mit einem Rastnocken 84 durch die Zylinderwand 10 hindurch in eine Ausnehmung 85 hineingreift und an einer Rastschulter 25 des ersten Zylinders 20 ausstösst. Ein Sicherungshebel 83 dient zum Unterstützen des Auslösehebels 82 in seiner gespannten Lage. Diese Anordnungen sind aus der Waffentechnik bekannt.

Die Funktionsweise ist einfach zu überblicken. Wenn das Ventil 62 betätigt wird, fliesst Druckfluid aus dem Anschluss A über die Oeffnung 14 im Zylinderboden 11 in den Zylinderraum 17 und der erste Kolben 2o wird zusammen mit Führungshülse 50 und darin befindlichem zweiten Kolben 40 und den Kolbenstangen 22 und 51 nach rechts in Fig. 1 gepresst, bis der Abzughebel 82 in seine Raststellung gebracht werden kann. Durch Betätigung des Ventils 65 wird dann der zweite Kolben 40 nach links in Fig. 1 gestossen. Durch nachfolgende Betätigung des Ventils 61 wird die Verbindung P-B unterbrochen und die Feder 71 kann den zweiten Kolben 40 nach rechts ziehen, wodurch Flüssigkeit über den Anschluss 48 angesaugt wird, die den Hohlraum 21 füllt.

Wird nun der Auslösehebel 82 betätigt, so drückt die Feder
70 den ersten Kolben 20 und damit sämtliche mit diesem verbundenen Teile und insbesondere die Nadel 31 nach links, bis
die Schlagdämpfer 27 auf dem Zylinderboden 11 anschlagen.
Wenn die Hülse 32 vordem an einen Baumstamm angesetzt wurde,
wird daher die Injektionsnadel in den Stamm hineingepresst.

Durch Betätigung des Ventils 65 wird der zweite Kolben 40
nach links in Fig. 1 gestossen und die Flüssigkeit im Hohlraum 21 wird durch die Injektionsnadel in den Baumstamm
hineingepresst.

Mittels eines auf die Kolbenstange 51 aufgeschraubten Ringes
74 kann der Weg der Kolbenstange 51 begrenzt werden, so dass
allenfalls nur ein Teil der Flüssigkeit aus dem Hohlraum 17
ausgestossen werden kann.

Um den Schlag oder den Druck der Feder 70 nach Auslösung des
Auslösehebels mit voller Wirkung auf die Injektionsnadel zu
bringen, ist eine Stütze gemäss Fig. 3 vorgesehen. Diese
Stütze 90 besitzt eine Bodenplatte 91 mit einigen Ankerhaken
92 und einen Ankerstab 93, der mittels zwei um 90° versetzt
wirkender Gelenke 95, 96 in eine vertikale Stellung gebracht werden kann. Mittels eines Greifers 94 wird ein das Gehäuse 1 hinten umgreifender Bügel 80 auf die korrekte Arbeitshöhe eingestellt. Am vorderen Ende der Hülse 32 befindet sich wenigstens ein Stellstift 33, mit dem sich die Vorrichtung an der Pflanze fixieren lässt.

Wie aus Fig. 2 zudem noch entnehmbar ist, befindet sich in den sich gegenüberliegenden Aussenpartien 81 des unteren Gehäuseteils 3 Federn 86, die einerseits am Gehäuseteil 3 und anderseits an dieser Aussenpartie 81 abgestützt sind. Die Aussenpartien 81 sind aber am Gehäuseteil 3 begrenzt längsverschieblich geführt, so dass wenn nötig eine begrenzte Verkürzung des Gerätes zwischen einem Stamm und der Stütze 90 möglich ist.

Wenn zudem die Injektionsnadel 31 einen elliptischen Querschnitt aufweist, ist nur leicht erkennbar, dass eine solche Vorrichtung bei der Pflanze höchstens eine geringfügige Verletzung hervorrufen kann, während bei bekannten Vorrichtungen durch Anbohren des Stammes oder gar mit einem Beilschnitt bei nicht vollkommener fachmännischer Anwendung erhebliche Verletzungen der Pflanze bewirkt werden können, möglich sein können, die unter Umständen mehr schaden, als die Injektion nützen kann.

Durch den voreinstellbaren Betrieb kann mit der erfindungsgemässen Vorrichtung nach Einstellung durch einen Fachmann
ein ungelernter Arbeiter die Arbeit verrichten, so dass
sich diese Vorrichtung auch in Ländern der Dritten Welt einsetzen lässt.

**0144287**

Patentansprüche

1.     Vorrichtung zum Einspritzen einer vorgegebenen Menge einer Flüssigkeit in die Leitungsbahn einer verholzten Pflanze mittels einer Injektionsnadel, dadurch gekennzeichnet, dass in einem Hohlzylinder (10) mit einerseits einem Zylinderboden (11) und anderseits einem Zylinderdeckel (12) ein mit einem zentralen Hohlraum (21) versehener erster Kolben (20) axialbeweglich angeordnet ist, dass dieser erste Kolben (20) eine den Zylinderboden (11) durchdringende und mit einer Längsbohrung (23) versehene, einen Leitungsdurchgang zum zentralen Hohlraum (21) bildende Kolbenstange (22) mit ausserhalb des Zylinders (10) befindlichen Halterung (30) für die Injektionsnadel (31) aufweist, dass ferner im genannten Hohlraum (21) ein axialbeweglicher zweiter Kolben (40) angeordnet ist, welcher zweite Kolben (40) mit einer Durchgangsleitung (41) zum Hohlraum (21) versehen ist, und dass Mittel (60, Fig. 4) zur Steuerung der Bewegung der beiden Kolben (20, 40) vorhanden sind.

2.      Vorrichtung nach Patentanspruch 1, dadurch gekennzeichnet, dass im Zylinder ein im ersten Kolben (20) starr gehaltertes und den Hohlraum (21) begrenzendes Führungsrohr (50) angeordnet ist, dass der zweite Kolben (40) mit einer im Führungsrohr (50) befindlichen rohrartigen Kolbenstange (51) versehen ist, in deren Innenraum (52) Leitungen (53, 54) für die Zufuhr von Flüssigkeit und eines Druckmediums für die Bewegung des zweiten Kolbens (40) angeordnet sind, dass ferner eine erste Schraubenfeder (70) einerseits am Zylinderdeckel (12) und anderseits am ersten Kolben (20) abgestützt ist, und dass eine zweite Schraubenfeder (71) einerseits am Führungsrohr (50) und anderseits an der Kolbenstange (51) abgestützt ist.

3.      Vorrichtung nach Patentanspruch 2, dadurch gekennzeichnet, dass einerseits in der Durchgangsleitung (41) des zweiten Kolbens (40) und anderseits in der Längsbohrung (23) in der Kolbenstange (22) des ersten Kolbens (20) je ein Einwegventil (24, 42) angeordnet ist.

4.      Vorrichtung nach Patentanspruch 3, dadurch gekennzeichnet, dass der Zylinderarm (13) zwischen Zylinderboden (11) und erstem Kolben (20) eine Oeffnung (14) für die Zufuhr von Druckfluid aufweist.

5.      Vorrichtung nach Patentanspruch 4, gekennzeichnet durch einen Steuerblock (60) mit Steuerventilen (61, 62) um wahlweise Druckfluid in den genannten Zylinderraum (17) oder in den Zylinderraum (43) hinter dem zweiten Kolben (40) zu bringen und zudem, um dem Hohlraum 21 Flüssigkeit zuzuführen.

6.      Vorrichtung nach einem der Patentansprüche 1 bis 5, gekennzeichnet durch einen den Hohlzylinder (10) auf der der Seite der Injektionsnadel (31) gegenüberliegenden Seite des Deckels (12) umfassenden Bügel (80) und durch ein Verankerungsmittel (90) zur Befestigung (81) des Bügels (80) im Abstand von der zu behandelnden Pflanze.

7.      Vorrichtung nach Patentanspruch 6, dadurch gekennzeichnet, dass die Befestigung (81) des Bügels (80) am Hohlzylinder (10) federnd abgestützt ist.

8.      Vorrichtung nach Patentanspruch 6, dadurch gekennzeichnet, dass die Befestigung (81) eine Auslösevorrichtung mit Abzugshebel (82) und Sicherungshebel (83) vorhanden ist, und dass an der Aussenwand (24) des ersten Kolbens (20) eine Rastschulter (25) gebildet ist.

# Fig. 1

0144287

Fig. 2

Fig. 3

Fig. 4